(19) Europäisches Patentamt
European Patent Office
Office européen des brevets

(11) EP 1 436 484 B1

(12) EUROPÄISCHE PATENTSCHRIFT

(45) Veröffentlichungstag und Bekanntmachung des Hinweises auf die Patenterteilung:
**25.05.2005 Patentblatt 2005/21**

(21) Anmeldenummer: **02801295.3**

(22) Anmeldetag: **24.09.2002**

(51) Int Cl.[7]: **E21B 33/138**

(86) Internationale Anmeldenummer:
**PCT/EP2002/010683**

(87) Internationale Veröffentlichungsnummer:
**WO 2003/033860 (24.04.2003 Gazette 2003/17)**

(54) **VERFAHREN ZUR VERRINGERUNG ODER ZUR VOLLSTÄNDIGEN EINSTELLUNG VON WASSERZUFLÜSSEN BEI EINER UNTERIRDISCHEN FORMATION, UND VERNETZBARE COPOLYMERE ZU DESSEN DURCHFÜHRUNG**

METHOD FOR REDUCING OR COMPLETELY ELIMINATING WATER INFLUX IN AN UNDERGROUND FORMATION, AND CROSSLINKABLE COPOLYMERS FOR IMPLEMENTING SAID METHOD

PROCEDE POUR DIMINUER OU STOPPER COMPLETEMENT DES ARRIVEES D'EAU DANS UNE FORMATION SOUTERRAINE, ET COPOLYMERES RETICULABLES POUR REALISER CE PROCEDE

(84) Benannte Vertragsstaaten:
**DE ES FR GB IT NL**

(30) Priorität: **12.10.2001 DE 10150190**

(43) Veröffentlichungstag der Anmeldung:
**14.07.2004 Patentblatt 2004/29**

(73) Patentinhaber: **Clariant UK Limited**
**Leeds LS18 4RP (GB)**

(72) Erfinder:
- **HEIER, Karl, Heinz**
  **60598 Frankfurt am Main (DE)**
- **KAYSER, Christoph**
  **55127 Mainz (DE)**
- **MORSCHHÄUSER, Roman**
  **55122 Mainz (DE)**
- **TARDI, Aranka**
  **63543 Neuberg (DE)**
- **SCHÄFER, Michael**
  **63584 Gründau (DE)**
- **MORGAN, James C.**
  **Yateley Hampshire GU46 6AG (GB)**
- **GUNN, Alistair**
  **Reading, Berkshire RG5 3SE (GB)**

(74) Vertreter: **Mikulecky, Klaus, Dr. et al**
**Clariant GmbH**
**Patente, Marken, Lizenzen**
**Am Unisys-Park 1**
**65843 Sulzbach (DE)**

(56) Entgegenhaltungen:
**EP-A- 1 059 316**
**WO-A-01/49971**
**WO-A-01/59254**
**US-A- 5 079 278**
**US-A- 5 379 841**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 436 484 B1

## Beschreibung

Die vorliegende Erfindung betrifft ein Verfahren zur Verringerung oder zur vollständigen Einstellung von Wasserzuflüssen bei einer unterirdischen Formation, die Kohlenwasserstoffe enthält, zu der Produktionsbohrung. Die vorliegende Erfindung betrifft ferner vernetzbare Copolymere, die im Verfahren anwendbar sind. Mit diesem Verfahren wird die Absperrung von Wasser erreicht, ohne deshalb den Durchgang von Öl und/oder von Kohlenwasserstoffgas zu der Bohrung wesentlich zu erschweren.

Oft existiert Wasser als Salzlösung in derselben Formation wie Öl oder Gas. Die Gewinnung von Öl oder von Kohlenwasserstoffgas bringt also die Gewinnung von Wasser in einer solchen Menge mit sich, dass sie beträchtliche Probleme aufwirft; sie verursacht direkt oder indirekt Ablagerung von Salzen in der Nachbarschaft der Bohrung oder in der Bohrung selbst, sie vergrößert beträchtlich die Korrosion aller Metallteile untertage oder übertage, sie vergrößert ohne Nutzen die Mengen der gepumpten, übergeführten und gelagerten Flüssigkeiten und sie schafft mit dem Öl Emulsionen, die schwierig übertage zu brechen sind und die untertage in den Hohlräumen der Formation Blockierungen bilden können.

Gemäß dem Stand der Technik sind zahlreiche Verfahren vorgeschlagen und ausgeübt worden, die dazu bestimmt sind, die Wasserzuflüsse in die Bohrungen zur Gewinnung von Öl oder Kohlenwasserstoffgas zu verringern. Sie bestehen oft darin, in der Formation zwischen dem Wasser und der Bohrung oder zwischen dem Wasser und dem Öl oder Kohlenwasserstoffgas eine undurchdringliche Sperre einzubringen. Die gewöhnlich eingebrachten Mittel blokkieren fast ebenso viel Öl oder Kohlenwasserstoffgas wie Wasser. Die Bestandteile dieser Sperrung können sein: Zement, Harze, Suspensionen von festen Teilen, Paraffine oder wasserlösliche Polymere, die durch Einbringen von sogenannten Vernetzern in der Lagerstätte vernetzt werden.

Zur Zeit verwendet man Polymere, die in Lösung in das poröse Milieu eingebracht werden, an der Oberfläche des Feststoffes adsorbiert werden und in den Porenraum hineinragen, so dass sie sich dafür eignen, die Wasserzuflüsse zu verringern. Im Gegensatz dazu passieren die nicht wässrigen Fluide, wie Öl oder vor allem Kohlenwasserstoffgas die adsorbierten Makromoleküle, die nun ein vernachlässigbares Volumen an der Wand einnehmen und so den Durchgang weitgehend freilassen.

Aus US-A-4 095 651 ist die Verwendung von hydrolysierten Polyacrylamiden bekannt. Es hat sich jedoch gezeigt, dass dieser Polymertyp hauptsächlich gegenüber Wasser mit geringem Salzgehalt wirksam ist und durch das Wasser mit höherem Salzgehalt unwirksam wird. Bei höheren Temperaturen neigen diese Polymeren in Gegenwart von mehrwertigen Ionen zur Bildung von Niederschlägen, die die Poren der Gesteinsformationen verstopfen können.

Aus US-A-4 718 491 ist die Verwendung von Polysacchariden bekannt. Diese Verbindungen, die schlecht in den Porenraum injizierbar sind, bewirken zwar eine Verzögerung oder Verminderung des Wasserzuflusses, lassen aber nur eine unvollständigen Nutzung der vorhandenen Kohlenwasserstoffreserven der Lagerstätten zu, bzw. verlieren bei höheren Temperaturen ihre Wirkung.

Aus US-A-4 842 071 ist die Verwendung von nicht-hydrolysierten Acrylamidpolymeren oder -copolymeren bekannt, die durch nachträgliches Einbringen einer wässrig-basischen Lösung hydrolysiert werden. Dieses Verfahren besitzt Nachteile hinsichtlich eines zusätzlichen Arbeitsaufwandes durch das Einbringen einer weiteren Lösung, sowie durch die Problematik der Erreichbarkeit der injizierten Polymerlösung durch das Nachlegen der basischen Lösung und im Hinblick auf eine erhöhte Korrosionsanfälligkeit der eingesetzten Geräte. Zudem ist die Wirksamkeit der Polymerlösung nur bei erfolgter Umsetzung mit der wässrig-basischen Lösung gegeben, wobei der Grad der Wirksamkeit durch den Umsetzungsgrad bestimmt wird.

EP-B-0 577 931 offenbart ein Verfahren zur Wasserabsperrung, das von Polymeren aus 5 - 90 Gew.-% AMPS, 5 bis 95 Gew.-% N-Vinylamiden sowie ggf. bis zu 90 Gew.-% N,N-Diallylammoniumverbindungen und ggf. bis zu 90 Gew.-% eines weiteren olefinisch ungesättigten Monomers Gebrauch macht. Diese Polymere sind unvernetzt. Dieses Verfahren wirkt nur bei relativ kleinen Permeabilitäten, etwa bei Gassonden mit Permeabilitäten im Bereich von einigen mD (Millidarcy).

WO-01/49971 offenbart Copolymere und ein Verfahren zur Wasserabsperrung unter Verwendung dieser Copolymere, die Struktureinheiten von Vinylphosphonsäure, Acrylamid und gegebenenfalls auch AMPS und N-Vinylformamid enthalten, und die mit Zirkoniumverbindungen vernetzt werden können. Der Anteil der vernetzbaren Phosphonsäure- und Carboxylgruppen muss zwischen 0,01 und 7,5 Mol-% liegen.

Aufgabe der Erfindung ist es, ein Verfahren zur Verringerung des Wasserzuflusses in Produktionsbohrungen zur Verfügung zu stellen, ohne die Gewinnung von Öl oder Kohlenwasserstoffgas zu vermindern.

Überraschenderweise hat sich gezeigt, dass wasserlösliche Copolymere auf Basis von Acrylamidoalkylensulfonsäure, N-Vinylamiden, Acrylamid und Vinylphosphonsäure, die während der Anwendung vernetzt wurden, sich durch eine hohe Adsorption an den Gesteinen der Lagerstätte auszeichnen, ein elastisches Dehn-Stauchverhalten besitzen, eine besondere Stabilität gegenüber Salzen in Lagerstättenwassern zeigen und über einen breiten Temperaturbereich, insbesondere bei höheren Temperaturen, eingesetzt werden können. Die Temperaturstabilität lässt sich durch das Verhältnis von Acrylamid zu Acrylamidoalkylensulfonsäure steuern.

Überraschenderweise wurde ferner gefunden, dass die Erhöhung des Anteils an Acrylamidoalkylensulfonsäure zu einer erhöhten Stabilität des vernetzen Gels unter erhöhter Temperatur führt. Die Möglichkeit der Stabilitätssteuerung bietet einige Vorteile. Zunächst einmal kann die Lebensdauer einer Behandlung bei erhöhten Lagerstättentemperaturen erhöhen. Dieser Punkt kann über die Wirtschaftlichkeit einer Behandlung entscheiden. Lagerstätten mit Temperaturen von > 80°C waren häufig nicht mehr wirtschaftlich zu behandeln.

Ein weiterer Vorteil ist die Möglichkeit gezielt ein Polymer zu wählen, das in der Lebensdauer seiner Wirksamkeit unter den geplanten Bedingungen begrenzt ist. Vielfach ist die Auswirkung einer Behandlung zur Modifikation der relativen Permeabilitäten einer Lagerstätte nicht bekannt und erste Behandlungen einer Quelle experimentell. Eine solche Behandlung verändert die gesamten Flüssigkeitsströme der Lagerstätte. Das hat weitreichende Konsequenzen auf die Bildung von Ablagerungen, Korrosion oder die Integrität der Formation. Für den Fall, dass diese Ergebnisse nicht den gewünschten Effekt zeigen, ist es erwünscht das Behandlungsergebnis wieder rückgängig machen zu können. Eine Behandlung, die nach einer kurzen Testphase wieder unwirksam wird ist daher insbesondere für die experimentelle Implementierung der Methode sehr vorteilhaft.

Das erfindungsgemäße Verfahren darf nicht mit dem Verfahren zur tertiären Gewinnung von Öl verwechselt werden, bei dem eine Polymerlösung, die im allgemeinen eine schwache Konzentration besitzt (einige 100 ppm) durch eine oder mehrere Injektionsbohrungen eingebracht wird, und zwar mit einem ausreichenden Druck, damit die Lösung in die Formation eindringt und einen Teil des Öles dieser Formation ersetzt, das sodann mit einer anderen Reihe von Produktionsbohrungen gewonnen wird. Die eingebrachten Mengen sind in der Größenordnung des Volumens der Formation. Es ist wohlbekannt, dass polymerhaltiges Wasser für dieses Gewinnungsverfahren viel wirksamer ist, da es viskoser ist als das Lagerstättenwasser.

Das erfindungsgemäße Verfahren, dessen Ziel es ist, die Wasserzuflüsse zu einer Produktionssonde im Laufe der Produktion zu reduzieren, besteht darin, in die Lagerstätte - ausgehend von dieser Bohrung - eine Menge einer Polymerlösung einzubringen, und diese untertage zu vernetzen.

Gegenstand der vorliegenden Erfindung ist somit ein Verfahren zur Verringerung oder vollständigen Einstellung der Wasserzuflüsse zu einer Erdöl- oder Erdgasproduktionsbohrung, indem man in diese Bohrung eine wässrige Lösung eines Copolymers einbringt, wobei das Copolymer

A) 40 - 98 Gew.-% Struktureinheiten der Formel

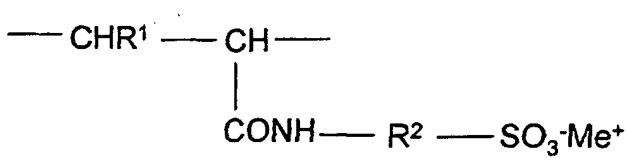

(I)

worin

$R^1$ Wasserstoff oder Methyl,
$R^2$ $C_2$-$C_{10}$-Alkylen, und
$Me^+$ ein Ammonium- oder ein Alkalimetallion bedeutet,

B) 0,1 bis 58 Gew.-% Struktureinheiten der Formel

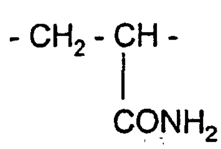

(II)

C) 0,1 bis 10 Gew.-% Struktureinheiten der Formel

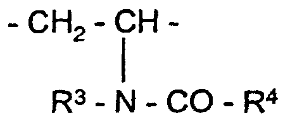

(III)

worin

$R^3$ und $R^4$ unabhängig voneinander Wasserstoff, Methyl oder Ethyl, oder $R^3$ und $R^4$ zusammen eine Propylengruppe, die unter Einschluss eines Restes

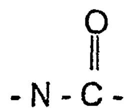

einen Pyrrolidonrest oder unter Einschluss einer Pentamethylengruppe einen Caprolactamrest bildet, bedeutet, und

D) 0,1 bis 10 Gew.-% Struktureinheiten der Formel

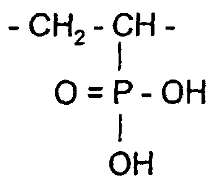

(IV)

enthält, und gleichzeitig mit dem Copolymer oder danach in die Formation bzw. Lagerstätte einen Vernetzer für das Copolymer einbringt, der wenigstens eine Zirkonium-, Chrom-, Titan- oder Aluminiumverbindung umfasst, und anschließend die Bohrung zur Gewinnung von Erdöl und/oder Erdgas in Betrieb nimmt.

Ein weiterer Gegenstand der Erfindung ist ein Copolymer welches Struktureinheiten A), B), C) und D) wie oben definiert enthält.

Ein weiterer Gegenstand der Erfindung ist eine Zusammensetzung, enthaltend ein Copolymer welches Struktureinheiten A), B), C) und D) wie oben definiert enthält; sowie mindestens eine Titan-, Chrom-, Zirkonium- oder Aluminiumverbindung.

Vorzugsweise wird der Vernetzer nach dem Copolymer in die Formation bzw. Lagerstätte eingebracht.

$R^2$ bedeutet bevorzugt $C_2$-$C_6$-Alkylen, besonders bevorzugt $C_4$-Alkylen. Die Struktureinheiten A) leiten sich vorzugsweise von 2-Acrylamido-2-methylpropansulfonsäure (AMPS) ab. Das Copolymer enthält vorzugsweise 50 bis 98 Gew.-%, insbesondere 70 bis 97,7 Gew.-% der von AMPS abgeleiteten Struktureinheiten.

Die Struktureinheiten B) liegen vorzugsweise in einer Menge von 2 bis 45 Gew.-%, insbesondere 5 bis 40 Gew.-% im Copolymeren vor.

In bevorzugten Struktureinheiten C) bedeuten $R^3$ und $R^4$ Wasserstoff.

Vorzugsweise enthält das Copolymer 0,5 bis 5 Gew.-%, insbesondere 0,8 bis 3 Gew.-% Struktureinheiten C).

Die Struktureinheiten D) liegen vorzugsweise in Mengen von 0,5 bis 5, insbesondere 0,8 bis 3 Gew.-% vor.

Die Molekulargewichts der Copolymeren liegen vorzugsweise zwischen 50.000 und $2 \cdot 10^7$ g/mol. Besonders bevorzugt sind Molekulargewichte von 500.000 bis $10^7$ g/mol, insbesondere $10^6$ bis $8 \cdot 10^6$ g/mol.

In einer weiteren bevorzugten Ausführungsform addieren sich die Struktureinheiten A), B), C) und D) zu 100 Gew.-%.

Die Copolymere sind durch Copolymerisation der Verbindungen erhältlich, aus denen sich die Struktureinheiten der Formeln I, II, III und IV ableiten. Es handelt sich bei den Copolymeren um Hauptkettencopolymere, nicht um Pfropfcopolymere.

Die Copolymerisation kann nach allen bekannten Polymerisationsverfahren im Bereich von pH 4 bis 12, vorzugsweise 6 bis 9, durchgeführt werden. Vorzugsweise wird sie als Gelpolymerisation durchgeführt.

Zur Einstellung des pH-Wertes werden zweckmäßigerweise alkalisch reagierende Salze von Alkalimetallen, z.B. Alkalikarbonate, Alkalihydrogenkarbonate, Alkaliborate, Di- oder Tri-Alkaliphosphate, Alkalihydroxide, Ammoniak oder organische Amine der Formel $N(R^7)_3$ eingesetzt, worin $R^7$ Wasserstoff, Alkyl mit 1 bis 4 Kohlenstoffatomen oder Hydroxyethyl ist und wobei mindestens einer der Reste $R^7$ verschieden ist von Wasserstoff. Bevorzugte Basen zur Einstellung des pH-Wertes sind die obengenannten Alkaliverbindungen, insbesondere Natriumhydroxid, Kaliumhydroxid, Natriumkarbonat, Natriumhydrogenkarbonat, Kaliumkarbonat und Kaliumhydrogenkarbonat und Natrium- oder Kaliumborate. Die Polymerisationsreaktion kann initiiert werden durch energiereiche elektromagnetische oder korpuskulare Strahlung oder durch Substanzen, die Radikale bilden. Dementsprechend sind als Polymerisationsinitiatoren geeignet organische Perverbindungen, wie z.B. Benzoylperoxid, Alkylhydroperoxid, wie z.B. Butylhydroperoxid, Cumolhydroperoxid, p-Menthanhydroperoxid, Dialkylperoxide, wie z.B. Bi-, tert.-Butylperoxid oder anorganische Perverbindungen, wie z.B. Kalium- oder Ammoniumpersulfat und Wasserstoffperoxid, ferner Azoverbindungen, wie z.B. Azo-bis-isobutyronitril, 2,2'-Azo-bis-(2-amidinopropan)-hydrochlorid oder Azo-bis-isobutyramid. Es ist vorteilhaft, die organischen oder anorganischen Perverbindungen in Kombination mit reduzierenden Substanzen sind Natriumpyrosulfit, Natriumhydrogensulfid, Thionylchlorid, Ascorbinsäure oder Kondensationsprodukte von Formaldehyd mit Sulfoxylaten. Besonders vorteilhaft lässt sich die Polymerisation unter Einsatz von Mannich-Addukten von Sulfinsäuren, Aldehyden und Aminoverbindungen ausführen, wie sie beispielsweise in DE-13 01 566 beschrieben worden sind.

Es ist weiterhin bekannt, den Polymerisationsansätzen kleine Mengen von sogenannten Moderatoren zuzusetzen, die den Verlauf der Reaktion dadurch harmonisieren, dass sie das Reaktionsgeschwindigkeits-Zeitdiagramm abflachen. Sie führen damit zu einer Verbesserung der Reproduzierbarkeit der Reaktion und ermöglichen damit, einheitliche Produkte mit äußerst geringen Qualitätsabweichungen herzustellen. Beispiele für geeignete Moderatoren dieses Typs sind Nitrilo-tris-propionylamid oder Hydrohalogenide von Monoalkylaminen, Dialkylaminen oder Trialkylaminen, wie z.B. Dibutylaminhydrochlorid. Auch bei der Herstellung der erfindungsgemäßen Copolymerisate können solche Moderatoren mit Vorteil verwendet werden.

Weiterhin können den Polymerisationsansätzen sogenannte Regulatoren zugesetzt werden; das sind solche Verbindungen, die das Molekulargewicht der hergestellten Polymerisate beeinflussen. Brauchbare bekannte Regulatoren sind z.B. Alkohole, wie Methanol, Ethanol, Propanol, Isopropanol, n-Butanol, sec.-Butanol und Amylalkohole, Alkylmercaptane, wie z.B. Dodecylmercaptan und tert.-Dodecylmercapten, Isooctylthioglycolat und einige Halogenverbindungen, wie z.B. Tetrachlorkohlenstoff, Chloroform und Methylenchlorid.

Üblicherweise wird die Polymerisation in einer Schutzgasatmosphäre ausgeführt, vorzugsweise unter Stickstoff.

Die Reaktion kann in Lösung, in inverser Emulsion oder - Suspension, oder unter den Bedingungen der Fällungspolymerisation bei Temperaturen von -5 bis 120°C, vorzugsweise von 5 bis 100°C, ausgeführt werden. Wenn Wasser als Lösungsmittel für die Polymerisationsreaktion eingesetzt wird, so verläuft sie in Lösung, und eine wässrige viskose Lösung des Copolymerisats wird erhalten.

Das Reaktionsprodukt kann isoliert werden, entweder durch Abdestillieren des Wassers aus der Lösung, oder durch Vermischen der wässrigen Lösung mit organischen Lösungsmitteln, die mit Wasser vollständig mischbar sind, in denen aber das Copolymerisat unlöslich ist. Bei der Zugabe solcher organischen Lösungsmittel zu der wässrigen Polymerlösung fällt das entstandene Polymerisat bzw. Copolymerisat aus und kann von der flüssigen Phase, z.B. durch Filtration abgetrennt werden. Vorzugsweise wird jedoch die erhaltene wässrige Lösung des Polymerisats bzw. Copolymerisats direkt für den weiteren Gebrauch eingesetzt, gegebenenfalls nach Einstellung auf eine bestimmte gewünschte Konzentration.

Wenn die Copolymerisation in einem organischen Lösungsmittel wie z.B. in einem niederen Alkanol, z.B. in tert.-Butanol, durchgeführt wird, so verläuft sie unter den Bedingungen der Fällungspolymerisation. In diesem Fall fällt das entstandene Polymerisat bzw. Copolymerisat im Verlauf der Reaktion in fester Form aus und kann leicht in üblicher Weise, wie z.B. durch Absaugen und anschließendes Trocknen, isoliert werden. Selbstverständlich ist es auch möglich und in manchen Fällen bevorzugt, das Lösungsmittel aus dem Reaktionsansatz heraus zu destillieren.

Die Copolymere werden in wässriger Lösung in die Formation oder Lagerstätte eingebracht. Die Konzentration der wässrigen Polymerlösung kann innerhalb großer Bereiche gewählt werden und liegt vorzugsweise zwischen 50 und 50.000, insbesondere 500 bis 5000 ppm in Gewichtsanteilen. Die Menge des Copolymers, die man in die Produktionszone um die Bohrung einbringt, hängt von den örtlichen Bedingungen ab. In den meisten Fällen beträgt sie 50 bis 5000 kg und vorzugsweise 200 bis 1000 kg pro Meter der behandelten Zone. Als weiteren Bestandteil kann die Polymerlösung eines oder mehrere Salze von Alkali- oder Erdalkalimetallen, insbesondere NaCl, KCl, $MgCl_2$, $MgSO_4$, $CaCl_2$, $Na_2SO_4$, $K_2SO_4$ und/oder $NaNO_3$, und allgemein von Chloriden, Sulfaten oder Nitraten von Metallen, wie z.B. Natrium, Kalium, Calcium oder Magnesium enthalten. Man bevorzugt Lösungen, die Natriumchlorid oder Kaliumchlorid enthalten. Besonders bevorzugt sind Seewasser, Formationswasser oder auch Prozesswasser Die Salze der Erdalkalimetalle sind weniger wünschenswert, insbesondere in größeren Mengen, da sie unerwünschte Niederschläge erzeugen können, z.B. wenn das Milieu Carbonate oder Sulfate enthält oder einen pH-Wert besitzt der gleich oder höher als 9 ist.

Die Konzentration an Salzen der salzhaltigen Polymerlösung kann innerhalb großer Bereiche gewählt werden. Sie hängt von der Natur und der Konzentration an Salz des Wassers der Lagerstätte ab und auch von der Natur des Salzes, das in der Polymerlösung vorhanden ist, so dass es nicht möglich ist, einen allgemeinen Bereich der verwendbaren Werte anzugeben. Bevorzugt wird Kaliumchlorid eingesetzt, das das Aufquellen von Ton in den Formationen verhindert. Ein Aufquellen des Tons könnte zu irreversiblen Formationsschäden führen.

Allgemein fällt für ein gegebenes Salz die Viskosität der Polymerlösung, wenn die Konzentration an diesem Salz wächst. Man kann also vorteilhafter Weise gemäß dem vorliegenden Verfahren eine Polymerlösung verwenden, deren Salzgehalt an Natriumchlorid höher ist als der Salzgehalt des Wassers der Lagerstätte.

Die Art der Einbringung der Polymerlösung ist an sich nicht neu. Man kann sich z.B. auf die Erläuterungen in der US-A-3 308 885 beziehen. Allgemein gesagt, übt man auf die Polymerlösung einen Druck aus, der größer ist als der Druck, der von den Fluiden, wie Lagerstättenwasser, Öl und Kohlenwasserstoffgas in der Lagerstätte ausgeübt wird, die für die Behandlungsweise gewählt wird (Lagerstättendruck), der aber unter dem Druck liegt, der zum hydraulischen Aufreißen der Lagerstätte führt bzw. diesen maximal erreicht.

In einer bevorzugten Ausführungsform des Verfahrens wird die zu behandelnde Formation vorgeflutet.

In einer weiteren bevorzugten Ausführungsform des Verfahrens wird zwischen der Einbringung des Copolymers und der Einbringung des Vernetzers Wasser, Wasser in dem Salze gelöst sein können, eine Pufferlösung oder eine verdickte wässrige Polymerlösung, in der zusätzlich Salze gelöst sein können, als Spacer in die Bohrung eingebracht.

In einer weiteren bevorzugten Ausführungsform kann das oben beschriebene Einbringen eines Spacers auch oder zusätzlich nach dem Einbringen des Vernetzers erfolgen.

In einer weiteren bevorzugten Ausführungsform kann nach der Einbringung der Lösungen des Copolymers und des Vernetzers eine mehr oder weniger lange Phase des Einschlusses erfolgen, bevor die Sonde wieder auf Produktion umgestellt wird.

Ebenso kann das Einbringen von Copolymerlösung und Vernetzer in beliebigen Mengenverhältnissen wiederholt werden, bevor oder nachdem die Sonde wieder auf Produktion zurückgeschaltet wurde. Hiermit ist es möglich verschiedene Zonen gezielt zu behandeln.

In einer weiteren bevorzugten Ausführungsform werden Teile oder auch die gesamte Polymer-Wasser-Mischungen mit Vernetzer vorbehandelt injiziert.

Die Vernetzung des Polymers kann im Bedarfsfalle durch Einwirkung bestimmter Stoffe auf die Gelbarriere aufgehoben werden. Grundsätzlich eignen sich Mittel, die für das Metallion stärkere Komplexliganden sind als die Phosphonsäure- bzw. Amin oder Amidgruppen des Polymers, sowie Oxidationsmittel. Bewährt haben sich in dem Zusammenhang Flusssäure oder ihre Vorläufer und starke Chelatbildner wie z.B. EDTA. Unter den Oxidationsmitteln haben sich Persulfate, Perborate und Wasserstoffperoxid bewährt.

Bevorzugte Vernetzer sind Verbindungen des Zirkoniums und/oder des Titans. Besonders bevorzugt sind Chelate von Zirkonium(IV), insbesondere Zirkoniumlactat und Zirkoniumgluconat. Die Vernetzerlösungen werden im allgemeinen vor der Einbringung mit Aminen wie Diisopropylamin oder Isopropylamin auf neutralen pH eingestellt. Die Konzentration des Vernetzers in der wässrigen Lösung kann über einen breiten Bereich von 0,001 bis 0,5 Gew.-% bezogen auf die Zirkonium- und/oder Titankonzentration variieren. Die Konzentration des Vernetzers ist vorzugsweise im Bereich von 0,01 bis 0,2 Gew.-%, insbesondere im Bereich von 0,025 bis 0,2 Gew.-%, speziell von 0,025 bis 0,15 Gew.-% bezogen auf die Zirkonium- und/oder Titankonzentration.

Die Copolymer- sowie die Vernetzerlösung können vorzugsweise im Bereich von pH 4 bis 6, insbesondere 4,5 bis 5,5 gepuffert sein.

Beispiele

Die nachfolgend aufgelisteten Beispiele zur Synthese von geeigneten Polymeren illustrieren die Erfindung, schränken sie jedoch nicht ein. Die in den Ausführungs- und Tabellenbeispielen benutzten Abkürzungen haben folgende Bedeutung:

Tabelle 1:

| Verwendete Abkürzungen | |
|---|---|
| AM | Acrylamid |
| AMPS® | 2-Acrylamido-2-methylpropansulfonsäure |
| NVCap | N-Vinylcaprolactam |
| NVF | Vinylformamid |
| NVP | N-Vinylpyrrolidon |

Tabelle 1: (fortgesetzt)

| Verwendete Abkürzungen | |
|---|---|
| VIMA | N-Vinyl-N-methyl-acetamid |
| VPS | Vinylphosphonsäure |

Beispiel 1

(Emulsionspolymerisation)

7,5 g Arkopal® N 100 (Nichtionischer Emulgator auf der Basis eines oxethylierten Phenolderivats) und 20,5 g Span® 80 (Nichtionischer Emulgator auf Basis eines Zuckeralkohol-Stearats) wurden in 350 ml Isopar® M (Technisches Gemisch von Isoparaffin mit einem Siedepunkt von ca. 200 - 240°C) aufgelöst und die resultierende Lösung in ein 1-L Reaktionsgefäß gegeben, das mit einem Rührer, Thermometer und einem Stickstoffeinlass versehen war. Dann wurde eine Monomerlösung durch Auflösung von

55 g Acrylamid,
42 g AMPS und
2,3 g Vinylphosphonsäure (VPS) in
120 ml Wasser hergestellt.

Der pH-Wert der Monomerlösung wurde auf 8,5 mit Ammoniak (25 %ig) eingestellt. Der Monomerlösung wurden 1,5 g NVF zugegeben. Unter schnellem Rühren wurde die wässrige Monomerlösung der organischen Phase zugefügt. Das Reaktionsgefäß wurde evakuiert und anschließend mit Stickstoff gefüllt. Danach wurde eine Lösung von 0,0275 g Ammoniumpersulfat in 3 ml Wasser dem Gemisch zugefügt und damit die Polymerisation gestartet. Die Reaktion dauerte 1 - 1½ Stunden, die Reaktionstemperatur wurde zwischen 30 und 40°C gehalten. Es resultiert eine stabile Emulsion, die unter Verwendung handelsüblicher oberflächenaktiven Mittel in an sich bekannter Weise in Wasser invertiert werden kann. Die resultierende Polymerlösung hatte einen k-Wert von 161.

Werden zu 200 ml einer 0,6 %igen wässrigen Lösung des Polymeren 1 ml einer 3 %igen Titanacetat, Zirkoniumlaktat-Lösung zugesetzt, entsteht eine hochviskose Lösung.

Beispiel 2

(Lösungspolymerisation)

In einem Polymerisationsreaktor von 1 Liter Inhalt, ausgestattet mit Planschliffdeckel, Rührer, Thermometer und Gaseinleitungsrohr wurden in

400 g Wasser
75 g AMPS gelöst,
2 g VPS zugesetzt

und mit Ammoniak (25 %ig) neutralisiert. Dann wurden

23 g Acrylamid und
1 g NVF hinzugefügt.

Der pH-Wert wurde auf 8,5 eingestellt und
unter Rühren und Einleiten von Stickstoff wurde das Reaktionsgemisch auf 70°C erhitzt.
1 g einer wässrigen 10 %igen Dibutylamin-HCl-Lösung und
0,1 g Ammoniumpersulfat wurden zugegeben.
Die Reaktion dauerte etwa 30 Minuten wobei die Temperatur auf 70°C anstieg. Das Reaktionsgemisch wurde viskos. Es wurde unter Rühren noch 2 Std. bei 80°C nachgeheizt. Man erhielt eine klare, hochviskose Lösung. Der k-Wert betrug 193.

Beispiel 3

(Gelpolymerisation)

In einem Polymerisationskolben von 1 l Inhalt, ausgestattet mit Planschliffdeckel, Rührer, Thermometer und Gaseinleitungsrohr wurde durch Auflösung von

55 g Acrylamid,
42 g AMPS und
2,3 g VPS in
250 g Wasser eine Monomerlösung hergestellt. Der pH-Wert wurde mit Ammoniak (25 %ig) auf 8,5 eingestellt. 1,5 g NVF wurde der Lösung zugesetzt. Unter Rühren und Einleiten von Stickstoff wurden schließlich 1 g einer wässrigen 10 %igen Dibutylamin-HCl-Lösung und 0,1 g Ammoniumpersulfat zugegeben. Man ließ unter Stickstoffeinleitung noch 3 Min. bei erhöhter Drehzahl rühren. Die Stickstoffeinleitung wurde beendet, Einleitungsrohr und Rührer wurden hochgezogen. Nach einer Induktionszeit von ca. 30 Min. setzte die Polymerisation ein, wobei die Temperatur von 20°C auf 78°C anstieg und die Lösung in ein formstabiles Gel überging. Nach einer Nachwärmzeit von 8 h bei 60°C wurde das Gel auf Raumtemperatur abgekühlt, zerkleinert, getrocknet und gemahlen. Der K-Wert betrug ca. 240.

Werden zu 200 ml einer 0,5 %igen wässrigen Lösung 1 ml einer 3,6 %igen Lösung von Zirkoniumacetat zugesetzt, so entsteht eine hochviskose thixotrope Masse.

Beispiel 4

(Fällungspolymerisation)

In einem Polymerisationskolben von 1 Liter Inhalt, ausgestattet mit Rührer, Ruckflusskühler, Thermometer, Tropftrichter und Gaseinleitungsrohr wurden in

400 ml tert.-Butanol,
75 g AMPS und
1,5 g VPS gelöst und mit Ammoniak neutralisiert. Der pH-Wert wurde auf 8,5 eingestellt. Zu dieser Lösung wurden
23 g Acrylamid und
1 g NVF gegeben. Unter Rühren und Einleiten von Stickstoff wurde die Monomerlösung auf 60°C angeheizt und 1 g Azoisobutyronitril zugegeben. Nach einer Induktionszeit von 3 Min. setzte die Polymerisation ein, die Reaktionstemperatur stieg auf 80°C und das Polymerisat fiel aus. Es wurde noch 2 h bei 80°C nachgeheizt. Das Copolymerisat kann durch Absaugen und Trocknen isoliert werden. Es kann jedoch auch das Lösungsmittel direkt unter vermindertem Druck abdestilliert werden. Man erhielt das Polymere in Form eines weißen, leichten Pulvers, das sich gut in Wasser löste und einen k-Wert von 205 hatte.

Gemäß dieser vier Verfahrensweisen wurden auch die Copolymerisate der folgenden Tabelle hergestellt.

Tabelle 2: Zusammenfassung der verwendeten Zusammensetzungen für die Beispiele 1 bis 16

| Beispiele | Polymer | AMPS | AM | VPS | NVF | weitere Monomere | weitere Additive | Methode | k-Wert |
|---|---|---|---|---|---|---|---|---|---|
| Nr. | | [g] | [g] | [g] | [g] | | | | |
| 1 | A | 42 | 55 | 2,3 | 1,5 | - | Arkopal® N 100, Span® 80 | Emulsion | 160 |
| 2 | B | 75 | 23 | 1,5 | 1,0 | - | - | Lösung | 193 |
| 3 | C | 42 | 55 | 2,3 | 1,5 | - | - | Gel | 262 |
| 4 | D | 75 | 23 | 1,5 | 1,0 | - | - | Gel | 256 |
| 5 | E | 87 | 11 | 1,3 | 1,0 | - | - | Gel | 257 |
| 6 | F | 87 | 11 | 1,3 | 1,0 | - | - | Fällung | 199 |
| 7 | G | 98 | 0,3 | 1,3 | 1,0 | - | - | Gel | 243 |
| 8 | H | 98 | 0,3 | 1,3 | 1,0 | - | - | Fällung | 193 |
| 9 | I | 87 | 11 | 1,3 | 1,0 | - | Arkopal® N 100, Span® 80 | Emulsion | 173 |
| 10 | K | 87 | 11 | 1,3 | - | 2,3 g NVP | Arkopal® N 100, Span® 80 | Emulsion | 177 |
| 11 | L | 98 | 0,3 | 1,3 | - | 3,0 g NVCap | - | Gel | 239 |
| 12 | M | 81 | 20 | 2,0 | 5,0 | - | - | Gel | 241 |
| 13 | N | 81 | 20 | 2,0 | 5,0 | - | - | Fällung | 195 |
| 14 | O | 80 | 20 | 5,0 | 1,0 | - | - | Gel | 251 |
| 15 | P | 95 | 0,25 | 2,5 | 2,5 | - | - | Gel | 234 |
| 16 | Q | 75 | 23 | 1,5 | 1,0 | - | - | Fällung | 205 |

Beispiel 17

Vorbereitung und Durchführung von Sandpackungs-Tests für RPM-Behandlung am Beispiel von Polymer D.

Diese Testmethode stellt ein einfaches Modellsystem für Lagerstätten dar. Die radiale Verteilung von Material um eine Bohrsonde kann damit nachgestellt werden.

Sie dienen dem Screening von Substanzen unter reproduzierbaren Bedingungen. Diese Methode ist benutzt worden, um die erfindungsgemäßen Substanzen und Behandlungsmethoden zu prüfen und zu vergleichen. Gegenüber Durchflutungstests von Gesteinsbohrkernen (Core-Flood Tests) hat diese Methode die Vorteile, dass sie leichter reproduzierbar ist, die Materialien kommerziell erhältlich sind, die gewünschten Permeabilität frei bestimmbar und reproduzierbar einstellbar ist und durch die Länge der Packung ein größerer Radius um die Sonde simuliert werden kann als mit Core-Flood Tests. Die Vergleichbarkeit zu Core-Flood Tests konnte durch vergleichende Messungen bestätigt werden.

Vorgehen bei Sandpackungs-Tests

Dieses Beispiel beschreibt das Vorgehen für Sandpackungs-Tests zur Charakterisierung von RPM-Materialien. Die Vorbereitung und Konditionierung eines Sandpackungs-Tests werden ebenso beschrieben, wie auch die Durchführung der RPM-Labor-Behandlung und die Auswertung der Daten.

Vorbereitung der Sandpackung

Die Sandpackungen, die in diesen Beispielen eingesetzt wurden, sollten die Porosität bzw. die Permeabilität der Lagerstätten simulieren, in denen die RPM-Behandlung eingesetzt werden soll. Durch den Einsatz einer Reihe von Sandfraktionen oder deren Mischungen konnte die jeweils gewünschte Permeabilität eingestellt werden. Typische Größenverteilungen für Sandfraktionen, wie sie zur Vorbereitung der Sandpackungen eingesetzt wurden, werden in Tabelle 3 zusammengefasst.

Tabelle 3

| Größenverteilungen der Sandfraktionen zur Vorbereitung von Sandpackungen. | |
|---|---|
| Sandfraktion | Größenverteilung |
| A | > 2,36 mm |
| B | 1,18 - 2,36 mm |
| C | 300 - 1180 µm |
| D | 150 - 300 µm |
| E | 90 - 150 µm |
| F | < 90 µm |

Zusätzlich zu diesen kommerziell verfügbaren Sandfraktionen konnten durch den Einsatz kalibrierter Siebe kleinere Größenverteilungen hergestellt werden. Feinere Sandfraktionen konnten mittels Kieselgel hergestellt werden. Beispiele für Packungspermeabilitäten, die aus den Sandfraktionen aus Tabelle 1 und deren Mischungen resultierten sind in Tabelle 4 zu finden. Ebenso werden dort Beispiele für relevante Felder entsprechender Permeabilität gegeben.

Tabelle 4

| Typische Sandzusammensetzungen für spezielle Feldanwendungen | | |
|---|---|---|
| Sandzusammensetzung | Permeabilität [D] | Beispielfeld |
| 100 % E | 4 | Amberjack (Golf von Mexico) |
| 100% D | 12 | -- |
| 80 % D : 20 % E | 10 | Harding (Nordsee) |

Üblicherweise wurden die Sandpackungen in 3/8 Zoll Edelstahl-Kapillaren mit einem Innendurchmesser von ¼ Zoll hergestellt. Alle angegebenen Volumen wurden mit -dieser hohen Wandstärke berechnet. Es wurden Kapillaren von je 1,5 m (5 ft) mittels Standard Swagelok® 3/8 Zoll Verschraubungen zu 4,5 m (15 ft) Länge verbunden und von 3/8-Zoll-auf-¼-Zoll-Fittings verschlossen. Standardmäßig wurden die Sandpackungen folgendermaßen vorbereitet:

Die entsprechende Zahl 1,5-m-Segmente 3/8 Zoll-Kapillare wurden mit 3/8 Zoll Swagelok® Verschraubungen und Ringbeschlägen versehen. Das Ende der Packung wurde mit einem von 3/8-Zoll-auf-¼-Zoll Fitting verschlossen, vor dessen 3/8 Zoll-Ende eine 90 µm Edelstahl Siebplatte gesetzt wurde (für feinere Sände wurden feinere Siebplatten verwendet). Der Sand wurde mit Hilfe eines Trichters in das erste 1,5 m Segment eingefüllt. Zur Verbesserung der Packung wurde die Kapillare kraftvoll mit einer Metallstange geschlagen. Wenn kein weiterer Sand in die Kapillare gepackt werden konnte, wurde der Trichter entfernt und durch eine 3/8 Zoll Blindschraube ersetzt. Danach wurde die Kapillare über eine Schablone auf einen Durchmesser von 25 cm aufgerollt. Das Aufrollen der Kapillare unterstützt

die Kompression des Sandes in der Packung. Die Blindschraube wurde entfernt und das nächste 1,5-m-Segment, versehen mit einer Blindschraube, in der gleichen Weise gepackt wie das erste, wurde aufgeschraubt und aufgerollt. Dieser Vorgang wurde dreimal wiederholt. Als das letzte 1,5-m-Segment gepackt war, wurde die abschließende 3/8 Zoll Verschraubung entfernt und durch einen 3/8-Zoll-auf-1/4-Zoll Fitting mit einer 90 µm Siebplatte am Ende der Kapillare ersetzt. Das letzte gerade Stück der Kapillare wurde dann so gewickelt, dass eine Packung mit parallelen Ein- und Ausgängen zu erhalten. Danach wurde die Packung mit einem wasserlöslichen Gas, wie z.B. Kohlendioxid, 30 min. bei einem Vordruck von 4,4 bar (30 psi) gespült, um die gesamte eingeschlossene Luft zu vertreiben. Danach wurde die Packung verschlossen und das Trockengewicht bestimmt.

Konditionierung der Sandpackung

Vor der Laborbehandlung musste die gefüllte, gewickelte und mit Kohlendioxid gespülte Sandpackung mit Wasser und Öl konditioniert werden. Dazu wurde die Sandpackung mit den Ein- und Auslässen in einem thermostatierten Ofen installiert. Bevor die Packung auf die Testtemperatur geheizt wurde, wurde das Porenvolumen durch Vergleichswägung nach Füllung der Packung mit dest. Wasser bestimmt. Eine Schemaskizze des Experimentellen Aufbaus wird in Abbildung 1 gegeben. Typischerweise wurde in den Beispielen der Rückdruck (Back-Pressure) auf weniger als 5 bar (z.B. 2 bar) eingestellt.

Danach wurde die Packung auf die Testtemperatur geheizt und mit dem Testwasser (synthetisches See- oder Formationswasser), mit dem Rohöl und schließlich wieder mit der Testwasser konditioniert. Für die Labortests wurden typischerweise synthetische Formations- oder Seewässer verwendet. Nach Möglichkeit sollte echtes Feld-Rohöl verwendet werden. Dieses wurde mit bis zu 15 % Toluol aufgestockt, um den Verlust leichtflüchtiger Komponenten und die damit verbundene Änderung der Viskosität zu kompensieren. Das Rohöl wurde mit einen 1 µm Filter von größeren Verunreinigungen befreit. Das Vorgehen im Einzelnen:

Die trockene mit Kohlendioxid gespülte Sandpackung wurde gewogen. Die Packung wurde mittels der ¼ Zoll Ein- und Auslässe im Thermostatofen angeschlossen. Das Ende, von dem die Packung begonnen wurde, wurde mit dem Einlass verbunden. Die Packung verbleibt bei Raumtemperatur während das Porenvolumen bestimmt wird.

Dann wurde die Packung mit einem Gesamtvolumen von ca. 100 ml entmineralisiertem Wasser geflutet. Die Datenschreiber wurden an den Ein- und Auslässen montiert und die Datenaufzeichnung gestartet.

Die wassergeflutete Sandpackung wurde deinstalliert und verschlossen. Durch erneutes Wiegen wurde das Porenvolumen bestimmt. Für eine 4,5 m langen E-Sandpackung beträgt dieser Wert typischerweise ca. 48 ml.

Danach wurde die Packung wieder im Ofen installiert und auf Testtemperatur aufgeheizt.

Das Test-Wasser wurde solange bei einem Fluss von 1 ml/min. durch die Packung zirkuliert, bis ein relativ stabiler Gegendruck erreicht war. Typischerweise sind dafür ca. 2 Porenvolumen, also ca. 100 ml erforderlich. Dadurch lässt sich die Permeabilität gegen Wasser bestimmen.

Vor der Konditionierung mit Rohöl wurde nun die Pumpe zunächst mit Methanol, dann mit Toluol und zuletzt mit Rohöl gespült.

Dann wurde das Rohöl mit einem Fluss von 1 ml/min. durch die Sandpackung gespült bis eine relativ stabiler Gegendruck gemessen wurde und kein weiteres Wasser aus der Packung vertrieben wurde ($S_{wi}$). in der Regel sind hierfür ebenfalls zwei Porenvolumen erforderlich. Damit kann die Permeabilität gegen Rohöl bestimmt werden.

Vor der Rekonditionierung mit Test-Wasser wurde die Pumpe nun mit Toluol, dann mit Methanol und schließlich mit Test-Wasser gespült.

Das Test-Wasser wurde schließlich mit einem Fluss von 1 ml/min. durch die Packung gepumpt. Es wurden wiederum ca. 2 Probenvolumen gepumpt bis der Druckabfall konstant war und kein Öl mehr aus der Packung vertrieben wurde ($S_{or}$). Damit kann die Permeabilität nach Rückstellen auf Wasser bestimmt werden.

Unter Verwendung der Darcy-Gleichung kann dann die Permeabilität der Sandpackung berechnet werden. Dazu müssen die Packungsdimensionen, die Flussraten, der Druckabfall entlang der Packung und die Viskosität der Flüssigkeit bekannt sein. Nach der Konditionierung ist die Packung für den Test einsatzbereit.

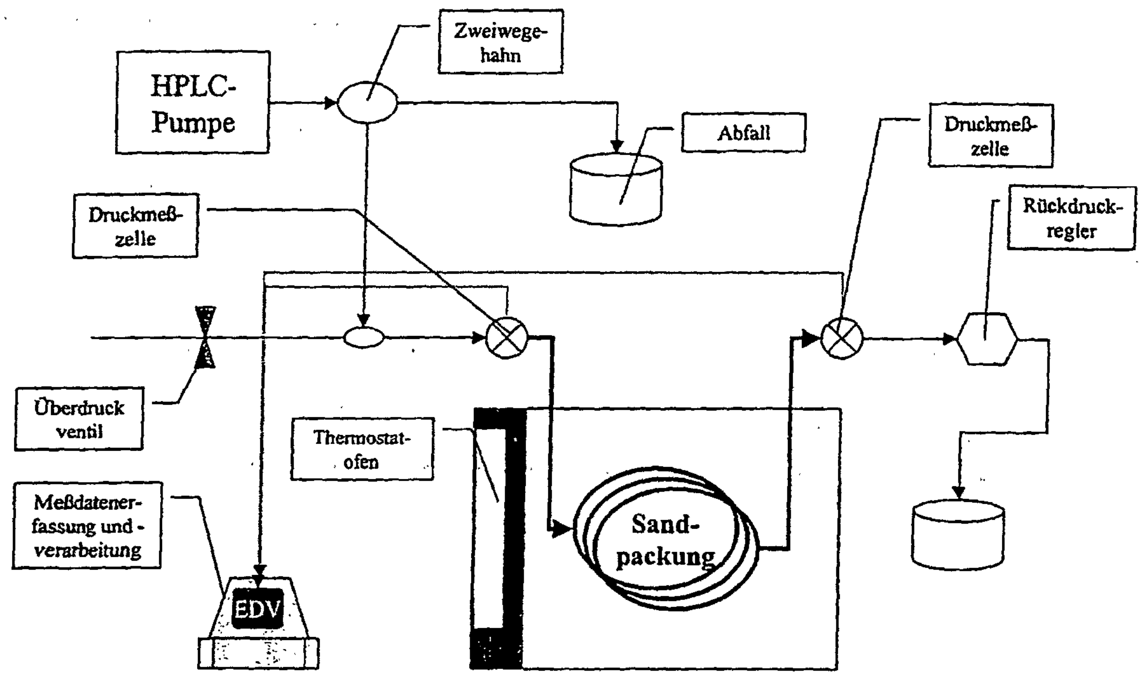


Abbildung 1 Schematische Zeichnung des Sandpackungs-Testaufbaus.

Bestimmung der Permeabilität

Die Permeabilität $k$ ist definiert als:

$$k = \frac{\mu \cdot Q \cdot L}{\Delta p \cdot A} \qquad \text{Gleichung 1}$$

Dabei ist:

| | |
|---|---|
| $Q$ = | Flussrate [ml/s] |
| $k$ = | Permeabilität [D] |
| A = | Durchschnittsffäche der Kapillare [$cm^2$] |
| $L$ = | Länge der Packung, |
| $\delta p$ = | Druckverlust entlang der Packung [atm] |
| $\mu$ = | Viskosität der Flüssigkeit [cP] |

Für vergleichende Messungen ist dieser Zugang einfach, sinnvoll und ausreichend genau. Für präzisere Bestimmungen der absoluten Permeabilität benutzt man eine Mehr-Raten-Technik. Die Messung ist genauer, da sie nicht von einer einzelnen Druckmessung abhängt, sondern von mehreren Flussraten. Damit hängt das Ergebnis von der Linearität der Druckmesseinrichtung und nicht von deren absoluten Genauigkeit ab. Die Testflüssigkeit werde mit mindestens vier verschiedenen konstanten Flussraten in der Nähe der geplanten Testflussrate injiziert. Nachdem sich für jede Flussrate und der Druckverlust stabilisiert hat, werden diese Werte aufgezeichnet. Die Permeabilität wird aus der nach Q umgestellten Darcy-Gleichung (Gleichung 2) aus der Steigung der Ausgleichsgeraden erhalten.

$$Q = k\,\frac{A \cdot \delta p}{\mu \cdot L} \qquad \text{Gleichung 2}$$

Jede Flussrate $Q$ wird gegen $\frac{A \cdot \delta p}{\mu \cdot L}$ aufgetragen. Die Daten sollten auf einer Geraden liegen, deren Steigung

*k* die Permeabilität ist. Die Ausgleichsgrade kann je nach statistischer Signifikanz grafisch oder durch Regressionsanalyse gewonnen werden.

Durchführung von RPM-Test-Behandlungen am Beispiel einer sequenziellen Behandlung mit Polymer D

Aufgrund der hier verwendeten Volumen und Pumpraten können Hinweise auf den Einsatz im Feld gewonnen werden. Eine typische sequentielle Behandlung und deren gepumpte Volumen im Labormaßstab und im Feld wird in Tabelle 5 angegeben.

Tabelle 5

| Vergleichbare Volumen für Laboruntersuchungen und für den Einsatz im Feld für eine RPM-Behandlung | | | | |
|---|---|---|---|---|
| Behandlungsschritt | Lösung | Konzentration | Volumen | |
| | | | Feld [bbl] | Labor [ml] |
| Polymer | Polymer D[1] | 2600 ppm | 2800 | 14,2 |
| Spacer | Gepuffertes Injektionswasser[1] | 40 % Acetat-Puffer | 700 | 3,5 |
| Vernetzer | Gepufferter Vernetzer | 750 ppm in 40% Puffer | 2800 | 14,2 |
| Nachspülung | Injektionswasser | ----- | 2600 | weggelassen |

1 - Konzentrierte Lösungen wurden mit Injektionswasser verdünnt.

Für Laboruntersuchungen wurden Polymer- und Vernetzer-Lösungen mit synthetischen Injektionswässern angesetzt. Die Polymerlösung wurde durch langsames Einstreuen des Polymerpulvers in den Wirbel der stark gerührten Flüssigkeit hergestellt (2,6 g/l). Die Acetatpufferfösung (100 %) wurde durch Mischen von 1 M Natriumacetal-Lösung (73 g/l) mit 1 M Essigsäure (100 ml/l) hergestellt. Die gepufferte Vernetzer Lösung wurde Zugabe der konzentrierten Zirkonium-Komplex-Lösung (10,72 g/l) zu einer Lösung aus 400 ml/l PufferLösung zu 600 ml/l Injektionslösung hergestellt.

Alle Lösungen wurden vor der Behandlung der Sandpackung frisch angesetzt. Vor jedem einzelnen Pumpschritt wurde der Einlass deinstalliert und die Testlösung an diesen Punkt gepumpt. Danach wurde der Einlass wieder montiert und das gewünschte Volumen injiziert. Die Volumen für eine Behandlung mit einer Permeabilität von ca. 10 Darcy, wie sie z.B. für das Harding-Feld in der Nordsee typisch ist werden in Tabelle 6 zusammengefasst.

Tabelle 6

| Behandlungsvolumen und Pumpraten für Laboruntersuchungen zur RPM Behandlung | | | | |
|---|---|---|---|---|
| Behandlungsschritt | Lösung | Konzentration | Behandlungsdetail | |
| | | | Volumen [ml] | Pumprate [ml/min] |
| Polymer | Polymer D[1] | 2600 ppm | 14,2 | 0,33 |
| Spacer | Gepuffertes Injektionswasser | 40% Acetat-Puffer | 3,5 | 0,1 |
| Vernetzer | Gepufferter Vernetzer | 750 ppm in 40% Puffer | 14,2 | 0,1 |
| Rückspülung | Injektionswasser | --- | 17,7 | 0,05 |

1 - Konzentrierte Lösungen wurden mit Injektionswasser verdünnt.

Die Pumpe wurde mit Polymerlösung gespült, die Einlasskapillare in der Packung wurde entfernt und das Polymer an den Anfang der Packung gepumpt. Die Einlassleitung wurde wieder angeschlossen. Die Pumpe wurde auf das gewünschte Pumpvolumen und die Flussrate eingestellt und gestartet. Während des gesamten Tests wurden die Drücke am Ein- und Auslass aufgezeichnet (14,2 ml bei 6 ml/h).

Sobald die Polymerlösung eingebracht ist, wurde die Pumpe auf die gepufferte Spacer Lösung umgestellt. Eine Einlassleitung wurde wiederum entfernt, die Pumpe mit Pufferlösung gespült und bis zum Anfang der Packung vorgepumpt. Die Einlasskapillare wurde wieder angeschlossen und das erforderliche Volumen der Spacerlösung mit der gewünschten Flussrate injiziert (z.B. 3,5 ml bei 6 ml/h).

Typischerweise wurde die Vernetzerlösung mit einer separaten Pumpe auf die gleiche Weise - wie oben beschrieben - appliziert (z.B. 14,2 ml bei 6 ml/h). Pumpen, die zum Einbringen des Vernetzers benutzt werden, sollten eine Stunde lang mit Pufferlösung gespült werden, bevor erneut Polymerlösung damit gepumpt wird. Vernzerreste können dazu führen, dass sich vorzeitig ein Polymergel bildet.

Nach der Einbringung der Vernetzerlösung wurde die Flussrichtung der Sandpackung umgekehrt, um den Produktionsbetrieb der Sonde zu simulieren. Bevor die Flussrichtung auf die Produktionsrichtung (flowback) umgestellt wird, kann eine zusätzliche Einschlusszeit (shut in) realisiert wurden (z.B. vier Stunden). Durch den Rückfluss kommen Polymer und Vernetzer in Kontakt und bilden die Gelbank aus, die die Permeabilität gegenüber Wasser verringern soll.
Die Pumpe, mit der Polymer- und Spacer-Lösung gepumpt wurden, wurde mit dem Injektionswasser gespült, das auch zum Konditionieren der Packung benutzt wurde. Das Injektionswasser wurde wiederum zum Ende der Einlassleitung gepumpt und mit der Sandpackung verbunden. Auf diese Weise wurde das kombinierte Volumen von Spacer und Polymerlösung zurückgepumpt (z.B. 17,7 ml bei 3 ml/h).
Die Packung kann nun abermals für z.B. 48 h eingeschlossen werden, damit sich der Gelblock ausbilden kann.
Nachdem sich der Gelblock entwickelt hatte, wurde der Blockfaktor ermittelt. Dazu wurde Formationswasser (Injektionswasser, wie zum Konditionieren) durch den Gelblock gepumpt und der Druckverlust notiert, sobald sich der Wert stabilisiert hat. Danach wurde Rohöl gepumpt, bis ein stabiler Druckverlust notiert werden konnte.

Bestimmung der Blockfaktoren für Wasser und Öl

Nachdem die RPM-Behandlung durchgeführt worden ist, wurden die Blockfaktoren für Wasser und Öl bestimmt. Die Werte wurden aus dem Vergleich der relativen Druckverluste (oder Permeabilitäten) gewonnen, die während der Konditionierungsphase der Sandpackung für Öl (Öl bei Restwasser) und für Wasser (nach der Ölflutung, $S_{OR}$) gemessen wurden, mit den entsprechenden Werten, die nach der Behandlung erreicht wurden. Es ist wichtig die gemessenen Druckverluste in bezug auf die angewandten Flussraten zu korrigieren, da während der Konditionierungsphase die Flussraten in Form der Pumpraten oftmals deutlich größer sind als nach der Behandlung. Typischerweise wurde eine Packung mit 60 ml/h konditioniert und nach der Behandlung wurden Flussraten von 1 - 2 ml/h benutzt. Nachdem die Behandlung zurück gespült worden ist, wurde sie für 48 Stunden eingeschlossen. Danach wurden die Blockfaktoren für Wasser und für Öl bestimmt.
Zunächst wurde abhängig von der Größe des entstandenen Blocks mit einer Flussrate von 1 - 2 ml/h Formationswasser durch die Sandpackung gespült. Die tatsächlich angelegte Flussrate hängt von der Größe des Druckabfalls entlang der Packung ab, da die Pumpe und die das Überdruckventil auf 100 bar limitiert sind. Formationswasser wurde gepumpt, bis sich der Druckabfall stabilisiert hat. Dazu sind üblicherweise ca. zwei Porenvolumen nötig.
Dieses wurde danach mit der gleichen Flussrate mit Rohöl durchgeführt, ebenfalls bis sich der Druckabfall stabilisiert hatte.
Der Blockfaktor für Wasser wurde als Quotient des Druckabfalls nach der Behandlung mit dem Druckabfall für Wasser nach der Konditionierung mit Öl erhalten ($S_{OR}$).
Der Blockfaktor für Öl ist der Quotient aus dem Druckabfall für Öl nach der Behandlung mit dem Druckabfall für Öl als die Packung mit Öl konditioniert wurde ($S_{WI}$).

Beispiel 18

Sequentielle Behandlung mit Polymer D als Langzeittest

Die benutze Sandpackung wurde in einer 4,5 m langen 3/8 Zoll Edelstahlkapillare mit einem Innendurchmesser von ¼ Zoll konditioniert. Die absolute Permeabilität der Packung betrug 3,5 D. Die Packung ist bei 70°C bis zu $S_{orw}$ konditioniert worden.
Die Behandlung besteht aus drei gesonderten Schritten (slugs), die alle bei 70°C durchgeführt wurden und in synthetischem Seewasser angesetzt worden sind:

16 ml einer 3000 ppm Lösung von Polymer D wurden mit einer Pumprate von 20 ml/h injiziert.

2 ml Acetatpuffer (0,03M Natriumacetat, 0,04M Essigsäure) wurden mit einer Rate von 20 ml/h injiziert.

16 ml Zirkoniumlaktat Lösung 1:93 w/w verdünnt wurden mit einer Pumprate von 1 ml/h injiziert.

Die Sandpackung wurde danach für 5 h eingeschlossen. Danach wurden 18 ml synthetischen Seewassers in umgekehrter Richtung mit einer Pumprate von 1 ml/h durch die Packung zurück gepumpt. Anschließend wurde die Packung für 50 h eingeschlossen.
Das Rückspülen wurde mit synthetischem Seewasser mit einer Rate von 1 ml/h bei 70°C begonnen. Nach 4 Tagen wurde die Temperatur auf 100°C gesteigert.
Folgende Blockfaktoren für Wasser ($RF_w$) wurden über einen Zeitraum von 150 Tagen gemessen:

| Zeit | Blockfaktor |
|---|---|
| [d] | [RFw] |
| 10 | 260 |
| 50 | 296 |
| 100 | 270 |
| 150 | 245 |

Beispiel 19

Sequentielle Behandlung mit Polymer C als Hochtemperaturtest

Die benutze Sandpackung wurde in einer 4,5 m langen 3/8 Zoll Edelstahlkapillare mit einem Innendurchmesser von ¼ Zoll konditioniert. Die absolute Permeabilität der Packung betrug 9 D. Die Packung ist bei 62°C bis zu $S_{orw}$ konditioniert worden.

Die Behandlung besteht aus drei gesonderten Schritten (slugs), die alle bei 62°C durchgeführt wurden und in synthetischem Seewasser angesetzt worden sind: 16 ml einer 3000 ppm Lösung von Polymer C wurden mit einer Pumprate von 20 ml/h injiziert.

2 ml Acetatpuffer (0,03M Natriumacetat, 0,04M Essigsäure) wurden mit einer Rate von 20 ml/h injiziert.

16 ml Zirkoniumlaktat Lösung 1:93 w/w verdünnt wurden mit einer Pumprate von 1 ml/h injiziert.

Die Sandpackung wurde danach für 5 h eingeschlossen. Danach wurden 18 ml synthetischen Seewassers in umgekehrter Richtung mit einer Pumprate von 1 ml/h durch die Packung zurück gepumpt. Anschließend wurde die Packung für 50 h eingeschlossen.

Das Rückspülen wurde mit synthetischem Seewasser mit einer Rate von 1 ml/h bei 70°C begonnen. Nach 4 Tagen wurde die Temperatur auf 95°C gesteigert.

Folgende Blockfaktoren für Wasser ($RF_w$) wurden über einen Zeitraum von 150 Tagen gemessen:

| Zeit | Blockfaktor |
|---|---|
| [d] | [RFw] |
| 2 | 270 |
| 29 | 270 |

Die Temperatur der Packung wurde schließlich weiter auf 123°C erhöht. Damit wurden dann folgende Blockfaktoren gemessen:

| Zeit | Blockfaktor |
|---|---|
| [d] | [RFw] |
| 1 | 225 |
| 3 | 100 |
| 5 | 30 |

Fazit: Während Polymer C bei einer Einsatztemperatur von 95°C 29 Tage lang einen konstant hohen Blockfaktor zeigt, so verringert sich der Blockfaktor bei einer Temperatur von 123°C innerhalb von 5 Tagen von 270 auf 30.

Beispiel 20

Sequentielle Behandlung mit Polymer D als Hochtemperaturtest

Die benutze Sandpackung wurde in einer 4,5 m langen 3/8 Zoll Edelstahlkapillare mit einem Innendurchmesser von ¼ Zoll konditioniert. Die absolute Permeabilität der Packung betrug 9 D. Die Packung ist bei 62°C bis zu $S_{orw}$ konditioniert worden.

Die Behandlung besteht aus drei gesonderten Schritten (slugs), die alle bei 62°C durchgeführt wurden und in synthetischem Formationswasser angesetzt worden sind:

16 ml einer 3000 ppm Lösung von Polymer D wurden mit einer Pumprate von 20 ml/h injiziert.

2 ml Acetatpuffer (0,03M Natriumacetat, 0,04M Essigsäure) wurden mit einer Rate von 20 ml/h injiziert.

16 ml Zirkoniumlaktat Lösung (Halliburton CL23) 1:93 w/w verdünnt wurden mit einer Pumprate von 1 ml/h injiziert.

Die Sandpackung wurde danach für 5 h eingeschlossen. Danach wurden 18 ml synthetischen Seewassers in umgekehrter Richtung mit einer Pumprate von 1 ml/h durch die Packung zurück gepumpt. Anschließend wurde die Packung für 50 h eingeschlossen.

Das Rückspülen wurde mit synthetischem Formationswasser mit einer Rate von 1 ml/h bei 62°C begonnen. Nach 6 Tagen wurde ein Wasserblockfaktor von 22 gefunden und die Temperatur auf 123°C gesteigert.

Folgende Blockfaktoren für Wasser ($RF_w$) wurden über einen Zeitraum von 27 Tagen gemessen:

| Zeit | Blockfaktor |
|---|---|
| [d] | [RFw] |
| 1 | 35 |
| 3 | 37 |
| 5 | 38 |
| 10 | 27 |
| 15 | 25 |
| 20 | 13 |
| 25 | 9 |
| 27 | 7 |

Beispiel 21

Co-Injection von Polymer E als Hochtemperaturtest

Die benutze Sandpackung wurde in einer 4,5 m langen 3/8 Zoll Edelstahlkapillare mit einem Innendurchmesser von ¼ Zoll konditioniert. Die absolute Permeabilität der Packung betrug 9 D. Die Packung ist bei 70°C bis zu $S_{orw}$ konditioniert worden.

Die Behandlung erfolgte als eine simultane Injektion von Polymerlösung und gepufferter Vernetzer Lösung aus zwei verschiedenen Pumpen, die gemeinsam in den Einlass der Sandpackung mündeten. Beide Lösungen wurden bei 70°C in synthetischem Seewasser angesetzt.

Pumpe 1:

26,5 ml einer 4500 ppm Polymer E Lösung mit einer Rate von 26,5 ml/h

Pumpe 2:

3,5 ml einer Zirkoniumlactat-Lösung, verdünnt auf 1:93 w/w, gepuffert mit 0,03 M Natriumacetat und 0,04 M Essigsäure, injiziert mit einer Rate von 3,5 ml/h Die Sandpackung wurde dann für 45 h eingeschlossen. Danach wurde für drei Tage kontinuierlich synthetisches Seewasser bei 70°C mit einer Rate von 3 ml/h durch die Packung zurückgespült.

Folgende Wasserblockfaktoren ($RF_w$) wurden gemessen

| Zeit | Blockfaktor |
|---|---|
| [d] | [$RF_w$] |

(fortgesetzt)

| Zeit | Blockfaktor |
|---|---|
| 1 | 26 |
| 5 | 34 |

Danach wurde die Temperatur der Sandpackung auf 123°C erhöht und über die Zeit wurden folgende Blockfaktoren gemessen:

| Zeit | Blockfaktor |
|---|---|
| [d] | [$RF_w$] |
| 3 | 62 |
| 7 | 54 |
| 11 | 50 |
| 15 | 47 |
| 17 | 43 |
| 23 | 28 |
| 28 | 23 |
| 33 | 19 |
| 37 | 16 |

Fazit: Polymer E lässt sich ohne Probleme bei 70°C mit dem Vernetzer coinjizieren, ohne vorzeitig einen Gelblock auszubilden. Erst während der Einschlusszeit bildet sich der Gelblock aus. Im Vergleich zu Polymer C ist eine weiter erhöhte Temperaturstabilität feststellbar.

**Patentansprüche**

1. Verfahren zur Verringerung oder vollständigen Einstellung der Wasserzuflüsse zu einer Erdöl- oder Erdgasproduktionsbohrung, indem man in diese Bohrung eine wässrige Lösung eines Copolymers einbringt, wobei das Copolymer

A) 40 - 98 Gew.-% Struktureinheiten der Formel

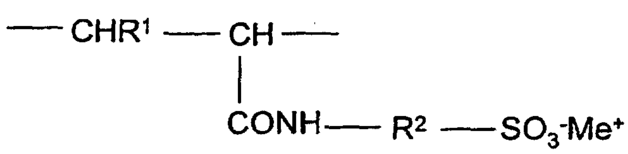

(I)

worin

$R^1$ Wasserstoff oder Methyl,
$R^2$ $C_2$-$C_{10}$-Alkylen, und
$Me^+$ ein Ammonium- oder ein Alkalimetallion bedeutet,

B) 0,1 bis 58 Gew.-% Struktureinheiten der Formel

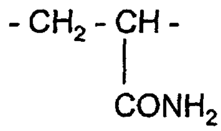 (II)

C) 0,1 bis 10 Gew.-% Struktureinheiten der Formel

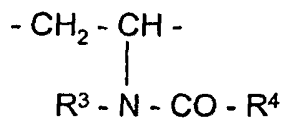 (III)

worin

$R^3$ und $R^4$ unabhängig voneinander Wasserstoff, Methyl oder Ethyl, oder $R^3$ und $R^4$ zusammen eine Propylengruppe, die unter Einschluss eines Restes

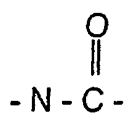

einen Pyrrolidonrest oder unter Einschluss einer Pentamethylengruppe einen Caprolactamrest bildet, bedeutet, und

D) 0,1 bis 10 Gew.-% Struktureinheiten der Formel

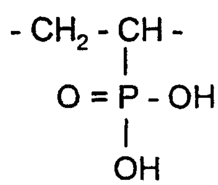 (IV)

enthält, und gleichzeitig mit dem Copolymer oder danach in die Formation bzw. Lagerstätte einen Vernetzer für das Copolymer einbringt, der wenigstens eine Zirkonium-, Chrom-, Titan- oder Aluminiumverbindung umfasst, und anschließend die Bohrung zur Gewinnung von Erdöl und/oder Erdgas in Betrieb nimmt.

**2.** Verfahren nach Anspruch 1, worin die Struktureinheiten der Formel 1 von 2-Acrylamido-2-methylpropan-sulfonsäure abgeleitet sind.

**3.** Verfahren nach Anspruch 1 und/oder 2, worin das Copolymer 50 bis 98 Gew.-% der Struktureinheiten der Formel I enthält.

**4.** Verfahren nach einem oder mehreren der Ansprüche 1 bis 3, worin die Struktureinheiten B in einer Menge von 2 bis 45 Gew.-% vorliegen.

**5.** Verfahren nach einem oder mehreren der Ansprüche 1 bis 4, worin in den Struktureinheiten C) $R^3$ und $R^4$ Wasserstoff bedeuten.

**6.** Verfahren nach einem oder mehreren der Ansprüche 1 bis 5, worin das Copolymer 0,5 bis 5 Gew.-% Struktureinheiten C) enthält.

7. Verfahren nach einem oder mehreren der Ansprüche 1 bis 6, worin das Copolymer 0,5 bis 5 Gew.-% Struktureinheiten D) enthält.

8. Verfahren nach einem oder mehreren der Ansprüche 1 bis 7, worin die Molekulargewichte der Copolymeren zwischen 50.000 und $2 \cdot 10^7$ g/mol liegen.

9. Verfahren nach einem oder mehreren der Ansprüche 1 bis 8, worin die Struktureinheiten A), B), C) und D) sich zu 100 Gew.-% addieren.

10. Verfahren nach einem oder mehreren der Ansprüche 1 bis 9, worin die zu behandelnde Formation vorgeflutet wird.

11. Verfahren nach einem oder mehreren der Ansprüche 1 bis 10, worin zwischen der Einbringung des Copolymers und der Einbringung des Verntzers Wasser, Wasser in dem Salze gelöst sein können, eine Pufferlösung oder eine verdickte wässrige Polymerlösung, in der zusätzlich Salze gelöst sein können als Spacer in die Bohrung eingebracht wird.

12. Verfahren nach einem oder mehreren der Ansprüche 1 bis 11, worin das Einbringen eines Spacers nach dem Einbringen des Vernetzers erfolgt.

13. Verfahren nach einem oder mehreren der Ansprüche 1 bis 12, worin nach der Einbringung der Lösungen des Copolymers und des Vernetzers eine von 2 Stunden bis 10 Tagen, insbesondere 3 bis 50 Stunden dauernde Phase des Einschlusses erfolgt, bevor die Sonde wieder auf Produktion umgestellt wird.

14. Verfahren nach einem oder mehreren der Ansprüche 1 bis 13, worin das Einbringen von Copolymerlösung und Vernetzer in beliebigen Mengenverhältnissen wiederholt wird, bevor oder nachdem die Sonde wieder auf Produktion zurückgeschaltet wurde.

15. Verfahren nach einem oder mehreren der Ansprüche 1 bis 14, worin Teile oder auch die gesamte Polymer-Wasser-Mischung mit Vernetzer vorbehandelt injiziert wird.

16. Verfahren nach einem oder mehreren der Ansprüche 1 bis 15, worin die Vernetzung des Polymers durch Einwirkung geeigneter Stoffe auf die Gelbarriere aufgehoben wird.

17. Verfahren nach Anspruch 16, worin die geeigneten Stoffe Flusssäure oder ihre Vorläufer, starke Chelatbildner, EDTA, Persulfate, Perborate und Wasserstoffperoxid sind.

18. Verfahren nach einem oder mehreren der Ansprüche 1 bis 17, worin als Vernetzer Verbindungen des Zirkoniums und/oder des Titans verwendet werden.

19. Verfahren nach einem oder mehreren der Ansprüche 1 bis 18, worin die Konzentration des Vernetzers in der wässrigen Lösung von 0,001 bis 0,5 Gew.-% bezogen auf die Zirkonium- und/oder Titankonzentration beträgt.

20. Verfahren nach einem oder mehreren der Ansprüche 1 bis 19, worin die Copolymer- sowie die Vernetzerlösung im Bereich von pH 4 bis 6, insbesondere 4,5 bis 5,5 gepuffert sind.

21. Copolymer, welches Struktureinheiten A), B), C) und D) wie in einem oder mehreren der Ansprüche 1 bis 20 definiert enthält.

22. Zusammensetzung, enthaltend ein Copolymer gemäß Anspruch 21, sowie mindestens eine Titan-, Chrom-, Zirkonium- oder Aluminiumverbindung.

## Claims

1. A method for reducing or completely eliminating water influx to a mineral oil or natural gas production borehole by introducing into this borehole an aqueous solution of a copolymer, the copolymer comprising

A) 40 - 98% by weight of structural units of the formula

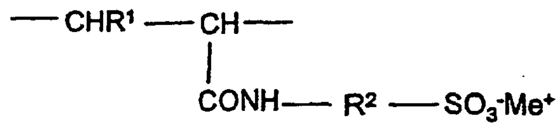

(I)

in which

$R^1$ is hydrogen or methyl,
$R^2$ is $C_2$-$C_{10}$-alkylene and
$Me^+$ is an ammonium or an alkali metal ion,

B) from 0.1 to 58% by weight of structural units of the formula

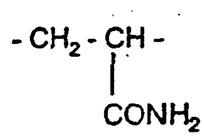

(II)

C) from 0.1 to 10% by weight of structural units of the formula

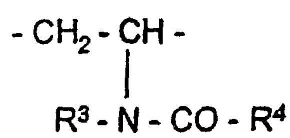

(III)

in which
$R^3$ and $R^4$, independently of one another, are hydrogen, methyl or ethyl, or $R^3$ and $R^4$ together are a propylene group which, with inclusion of a radical

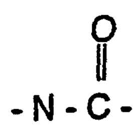

forms a pyrrolidone radical or, with inclusion of a pentamethylene group, forms a caprolactam radical, and

D) from 0.1 to 10% by weight of structural units of the formula

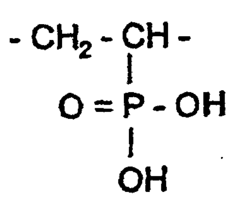

(IV)

and, simultaneously with the copolymer or thereafter, introducing into the formation or deposit a crosslinking agent of the copolymer, which crosslinking agent comprises at least one zirconium, chromium, titanium or aluminum compound, and then putting the borehole for the recovery of mineral oil and/or natural gas into operation.

2. The method as claimed in claim 1, wherein the structural units of the formula I are derived from 2-acrylamido-2-methylpropanesulfonic acid.

3. The method as claimed in claim 1 and/or 2, wherein the copolymer comprises from 50 to 98% by weight of the structural units of the formula I.

4. The method as claimed in one or more of claims 1 to 3, wherein the structural units B are present in an amount of from 2 to 45% by weight.

5. The method as claimed in one or more of claims 1 to 4, wherein, in the structural units C), $R^3$ and $R^4$ are hydrogen.

6. The method as claimed in one or more of claims 1 to 5, wherein the copolymer comprises from 0.5 to 5% by weight of structural units C).

7. The method as claimed in one or more of claims 1 to 6, wherein the copolymer comprises from 0.5 to 5% by weight of structural units D).

8. The method as claimed in one or more of claims 1 to 7, wherein the molecular weights of the copolymers are from 50 000 to $2 \cdot 10^7$ g/mol.

9. The method as claimed in one or more of claims 1 to 8, wherein the structural units A), B), C) and D) sum to 100% by weight.

10. The method as claimed in one or more of claims 1 to 9, wherein the formation to be treated is flooded beforehand.

11. The method as claimed in one or more of claims 1 to 10, wherein water, water in which salts may have been dissolved, a buffer solution or a thickened aqueous polymer solution in which salts may additionally have been dissolved is introduced as a spacer into the borehole between the introduction of the copolymer and the introduction of the crosslinking agent.

12. The method as claimed in one or more of claims 1 to 11, wherein the introduction of a spacer is effected after the introduction of the crosslinking agent.

13. The method as claimed in one or more of claims 1 to 12, wherein, after the introduction of the solutions of the copolymer and of the crosslinking agent, a shut-in phase lasting for from 2 hours to 10 days, in particular from 3 to 50 hours, takes place before the probe is changed back to production.

14. The method as claimed in one or more of claims 1 to 13, wherein the introduction of copolymer solution and crosslinking agent is repeated in any desired ratios before or after the probe is switched back to production.

15. The method as claimed in one or more of claims 1 to 14, wherein portions or else the total polymer/water mixture is pretreated with crosslinking agent before being injected.

16. The method as claimed in one or more of claims 1 to 15, wherein the crosslinking of the polymer is eliminated by the action of suitable substances on the gel barrier.

17. The method as claimed in claim 16, wherein the suitable substances are hydrofluoric acid or its precursors, strong chelating agents, EDTA, persulfates, perborates and hydrogen peroxide.

18. The method as claimed in one or more of claims 1 to 17, wherein compounds of zirconium and/or of titanium are used as crosslinking agents.

19. The method as claimed in one or more of claims 1 to 18, wherein the concentration of the crosslinking agent in the aqueous solution is from 0.001 to 0.5% by weight, based on the zirconium concentration and/or titanium concentration.

20. The method as claimed in one or more of claims 1 to 19, wherein the copolymer solution and the solution of crosslinking agent are buffered in the range from pH 4 to 6, in particular from 4.5 to 5.5.

**21.** A copolymer which comprises structural units A), B), C) and D) as defined in one or more of claims 1 to 20.

**22.** A composition comprising a copolymer as claimed in claim 21 and at least one titanium, chromium, zirconium or aluminum compound.

**Revendications**

**1.** Procédé pour la réduction ou l'arrêt complet de l'arrivée de flux d'eau dans un forage de production de pétrole ou de gaz, en introduisant dans ce forage une solution aqueuse d'un copolymère, le copolymère renferme :

A) de 40 à 98 % en masse d'unités de structure de formule

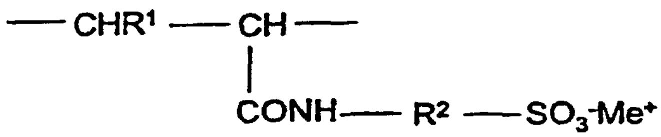

(I)

,

où

$R^1$ représente un atome d'hydrogène ou un groupe méthyle,
$R^2$ représente un groupe alkylène en $C_2$-$C_{10}$, et
$Me^+$ représente un ion ammonium ou métal alcalin,
B) de 0,1 à 58 % en masse d'unités de structure de formule

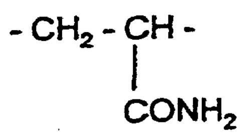

(II)

,

C) de 0,1 à 10 % en masse d'unités de structure de formule

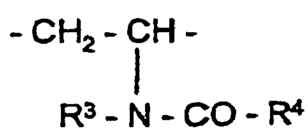

(III)

,

où

$R^3$ et $R^4$ indépendamment l'un de l'autre représentent un atome d'hydrogène, un groupe méthyle ou éthyle, ou $R^3$ et $R^4$ ensemble représentent un groupe propylène, qui forme, en renfermant un reste

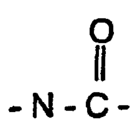

,

un reste pyrrolidone, ou en renfermant un groupe pentaméthylène un reste caprolactame, et
D) de 0,1 à 10 % en masse d'unités de structure de formule

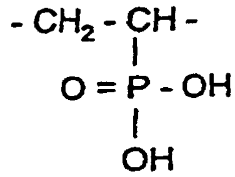

(IV)

,

et on introduit dans la formation ou le gisement, en même temps que le copolymère ou ensuite, un agent réticulant du copolymère, qui renferme au moins un composé de zirconium, de chrome, de titane ou d'aluminium, et ensuite on démarre l'exploitation du forage pour l'extraction de pétrole brut et/ou de gaz naturel.

**2.** Procédé selon la revendication 1, où les unités de structure de formule 1 dérivent de l'acide 2-acrylamido-2-méthylpropane-sulfonique.

**3.** Procédé selon la revendication 1 et/ou 2, où le copolymère renferme de 50 à 98 % en masse des unités de structure de formule 1.

**4.** Procédé selon une ou plusieurs des revendications 1 à 3, où les unités de structure B) sont présentes en une quantité de 2 à 45 % en masse.

**5.** Procédé selon une ou plusieurs des revendications 1 à 4, où dans les unités de structure C) $R^3$ et $R^4$ représentent un atome d'hydrogène.

**6.** Procédé selon une ou plusieurs des revendications 1 à 5, où le copolymère renferme de 0,5 à 5 % en masse d'unités de structure C).

**7.** Procédé selon une ou plusieurs des revendications 1 à 6, où le copolymère renferme de 0,5 à 5 % en masse d'unités de structure D).

**8.** Procédé selon une ou plusieurs des revendications 1 à 7, où les masses moléculaires des copolymères sont comprises entre 50000 et $2.10^7$ g/mole.

**9.** Procédé selon une ou plusieurs des revendications 1 à 8, où les unités de structure A), B), C) et D) s'additionnent à 100 % en masse.

**10.** Procédé selon une ou plusieurs des revendications 1 à 9, où la formation à traiter est préalablement inondée.

**11.** Procédé selon une ou plusieurs des revendications 1 à 10, dans lequel on peut introduire, entre l'introduction du copolymère et l'introduction de l'agent réticulant, l'eau, l'eau avec des sels dissous, une solution tampon ou une solution polymère aqueuse épaissie, dans laquelle peuvent de plus être dissous des sels, en tant que bouchon de fluide dans le forage.

**12.** Procédé selon une ou plusieurs des revendications 1 à 11, dans lequel le bouchon de fluide est introduit après l'introduction de l'agent réticulant.

**13.** Procédé selon une ou plusieurs des revendications 1 à 12, dans lequel l'introduction des solutions du copolymère et de l'agent réticulant est suivie d'une phase d'incorporation d'une durée de 2 heures à 30 jours, en particulier de 3 à 50 heures, avant que la sonde soit remise en position production.

**14.** Procédé selon une ou plusieurs des revendications 1 à 13, dans lequel on répète l'introduction de la solution du copolymère et de l'agent réticulant dans des rapports quantitatifs quelconque, avant ou après avoir remis la sonde en position production.

**15.** Procédé selon une ou plusieurs des revendications 1 à 14, dans lequel on injecte des portions ou aussi la totalité du mélange polymère-eau prétraité par l'agent réticulant.

16. Procédé selon une ou plusieurs des revendications 1 à 15, dans lequel la réticulation du polymère est arrêtée sur la barrière de gel par action de matières appropriées.

17. Procédé selon la revendication 16, dans lequel les matières appropriées sont l'acide fluorhydrique ou ses précurseurs, des agents chélatants forts, l'EDTA, les persulfates, les perborates et le peroxyde d'hydrogène.

18. Procédé selon une ou plusieurs des revendications 1 à 17, dans lequel on utilise en tant qu'agent réticulant des composés du zirconium et/ou du titane.

19. Procédé selon une ou plusieurs des revendications 1 à 18, dans lequel la concentration en agent réticulant dans la solution aqueuse est de 0,001 à 0,5 % en masse, par rapport à la concentration en zirconium et/ou titane.

20. Procédé selon une ou plusieurs des revendications 1 à 19, dans lequel la solution de copolymère ainsi que de réticulant est tamponnée dans le domaine de pH 4 à 6, en particulier de 4,5 à 5,5.

21. Copolymère qui renferme des unités de structure A), B), C) et D) comme défini dans une ou plusieurs des revendications 1 à 20.

22. Composition renfermant un copolymère selon la revendication 21, ainsi qu'au moins un composé du titane, du chrome, du zirconium ou de l'aluminium.